Europäisches Patentamt

European Patent Office

Office européen des brevets

(11) Publication number: 0 313 310
A2

# EUROPEAN PATENT APPLICATION

(21) Application number: 88309751.1

(22) Date of filing: 18.10.88

(51) Int. Cl.4: H02K 9/04 , H02K 17/36

(30) Priority: 20.10.87 JP 265679/87
23.10.87 JP 268784/87
11.03.88 JP 56017/88

(43) Date of publication of application:
26.04.89 Bulletin 89/17

(84) Designated Contracting States:
CH DE FR GB IT LI NL SE

(71) Applicant: SATAKE ENGINEERING CO., LTD.
7-2, Sotokanda 4-chome
Chiyoda-ku Tokyo 101(JP)

(72) Inventor: Satake, Toshihiko
2-38, Saijonishihonmachi
Higashihiroshima-shi Hiroshima-ken(JP)
Inventor: Onogi, Yukio
16-18, Kami-nukushina 2-chome Higashi-ku
Hiroshima-shi Hiroshima-ken(JP)

(74) Representative: Votier, Sidney David et al
CARPMAELS & RANSFORD 43, Bloomsbury
Square
London WC1A 2RA(GB)

(54) Variable speed controllable induction motor.

(57) In a variable speed controllable induction motor which has a unitary rotor (2) having a plurality of rotor cores (2A,2B) provided thereon with rotor conductive members (5) short-circuited by resistive members (r), a plurality of stators (25,26) surroundingly facing the respective rotor cores (2A,2B) and a phase shifter (PD) producing phase differences between the voltages induced on separate portions of the conductive members (5), there is provided an air mover (50) which forces in the ambient air into internal air passages formed between the rotor cores (2A,2B) and between the stators (25,26) and the machine frame (20) to radiate heat from and cool the resistive members (r) and forces the warmed air out of the machine frame (20). The air mover (50) is provided with a control device (60) which is operated on the basis of information such as a rotation speed of the rotor (2), phase differences produced by the phase shifter (PD) and temperatures taken within the machine frame (20).

Fig.1

## Variable speed controllable induction motor

The present invention relates to a variable speed controllable induction motor by which speed control over a wide range can be easily effected and in which the torque characteristics and efficiency are excellent.

A squirrel-cage rotor type induction motor is widely used as a prime mover as it is simple in its construction, less costly, less susceptible to damage and, moreover, both the power factor and efficiency are good in operation of the motor. However, drawbacks of the squirrel-cage rotor type induction motor are that the starting characteristics thereof are not good, that is, a starting torque is not sufficiently satisfactory despite high current consumption at starting and that it is difficult to effect a wide range speed control with high efficiency.

In a wound rotor type induction motor in which a secondary resistor is inserted externally through brushes and slip-rings in the circuit of rotor windings, a continuous and efficient speed control can be effected comparatively simply by means of controlling the resistance values to thereby change the slip of the motor. However, in the squirrel-cage rotor type induction motor, the structure or configuration thereof does not permit such a method of control and, therefore, the methods generally adopted are as explained hereunder.

As methods of continuous control of speeds, one method is by way of varying a power source frequency and another is by changing a power source voltage. Both of these methods are generally not satisfactory and have drawbacks in that efficiency of the control is low at low speed ranges. Further, the former method requires a high cost frequency convertor which, in the course of converting frequencies, produces high harmonic noise and other electromagnetic waves which, if they flow into the commercial power lines, would cause the occurrence of various harmonic noise problems, causing malfunctioning of computers or other electronic devices, heating of power capacitors, etc.

Further, as a method of continuous control of speeds, it is known to arrange that two induction motor components of the same poles are axially disposed side by side and two stators having primary windings cause, by either mechanical or electrical means, a phase difference between the rotating magnetic fields generated around each of the two rotor cores of a single rotor provided on a rotary axis so that a speed control is effected by varying the phase difference thereby to change the amount of the combined secondary voltage, that is, to change the amount of the secondary current flowing in the conductive members of the rotor.

Also, there has been known a system in which several kinds of poles are provided in stator winding circuits of the motor and a speed control is performed by means of switching the poles during the operation. While this system enables a speed to be controlled step-wise or non-continuously, it is not possible to perform a stepless and smooth control of the speed by this system.

The applicant of the present application filed a U.S. Patent Application, U.S. Serial No. 055,147, on May 28, 1987. The invention covered therein relates to a variable speed controlled induction motor characterized by the combination of:

a rotor formed in one-piece having a plurality of rotor cores mounted, with a predetermined air space or a non-magnetic core portion being provided therebetween, on a common axis and having a plurality of conductive members interconnected and respectively mounted on the rotor cores;

a plurality of stators having a plurality of stator cores disposed side by side and surroundingly facing the respective rotor cores and having stator windings wound respectively on the stator cores, the stator windings being connected or coupled in series with respect to a power source;

connecting members short-circuiting the conductive members at the air space or non-magnetic core portion disposed between the rotor cores; and phase shifting means for producing phase differences between the voltages induced on the portions of the conductive members which face one of the plurality of stators and the voltages induced on the corresponding portions of the conductive members which face another one of the stators. This invention provides a variable speed controllable induction motor which, as compared with conventional induction motors, is far superior in starting characteristics and in capability of performing an efficient speed control over a wide range.

However, in the induction motor as described in the above mentioned application, when the phase shifting means is operated to increase a phase difference between the rotating magnetic fields generated around the respective rotor cores for low speed operation of the motor, the current that flows in the connecting or resistive members short-circuiting a plurality of the rotor conductive members increases thereby causing the connecting members to be heated and increasing rapidly the accumulation of heat at various component parts of such element as the rotor conductive members. For the induction motor to be able to bear any continued operation for a long time at a low speed or any frequent changes between the low speed operation and the high speed operation, it is important that the overall system, especially the connecting members, the rotor conductive members and the rotor cores, are capable of constantly maintaining a cooled state by efficient radiation of heat.

The main object of the present invention is to provide a variable speed controllable induction motor in which the overall unit, especially connecting members, rotor conductive members disposed adjacent to and short-circuited by the connecting members and rotor cores disposed also adjacent to the connecting members are efficiently cooled by heat radiation thereby enabling the motor to maintain a continued operation at a low speed or to accommodate frequent changes between the low and high speed operations. and thereby ensuring high durability of the motor.

A further object of the present invention is to provide a variable speed controllable induction motor having a rotor capable of ensuring high durability.

According to the present invention, there is provided a variable speed controllable induction motor comprising:-
a unitary rotor having a plurality of rotor cores mounted, with a predetermined space being provided therebetween, on a common axis and having a plurality of rotor conductive members interconnected and respectively mounted on the rotor cores, the rotor conductive members being short-circuited by resistive members at an intermediate position between the rotor cores;
a plurality of stators disposed side by side and surroundingly facing the respective rotor cores and having stator windings wound respectively on the stators;
a phase shifting means for producing phase differences between the voltages induced on the portions of the conductive members which face one of the plurality of stators and the voltages induced on the corresponding portions of the conductive members which face another one of the stators;
an air moving means disposed at one of a plurality of openings provided in the machine frame for introducing air through the other openings into internal air passages formed between the rotor cores and between the stators and the machine frame whereby the resistive members radiating heat are cooled and thereafter the air is exhausted from inside the machine frame; and
a control means for controlling the operation of the air moving means based on at least one kind of information out of various kinds of information such as the rotation speed of the rotor, phase differences produced as a result of the controlling of the phase shifting means and the temperature taken at an appropriate point within the machine frame.

Fig. 1 is a sectional side elevation of the induction motor according to the present invention;

Fig. 2 is a transverse sectional view of the induction motor shown in Fig. 1 and having a rotating means for a stator and a phase detecting means;

Fig. 3 is a transverse sectional view of the induction motor provided with an air cooling means;

Fig. 4 is a transverse sectional view of the induction motor provided with another phase detecting means;

Fig. 5 is a transverse sectional view of the induction motor provided with still another phase detecting means;

Fig. 6 is a transverse sectional view of the induction motor provided with another rotating means and another phase detecting means;

Figs. 7 and 8 show an example of a resistive members' core;

Figs. 9 and 10 show an example of a conductive members' core; and

Figs. 11 and 12 show another example of a conductive members' core.

The embodiments of the present invention are explained hereunder with reference to the accompanying drawings. Although the explanation is made with reference to a three-phase induction motor which can be considered a typical type of multi-phase induction motor, it is to be understood that the present invention can well be embodied in other multi-phase induction motors. As to the types of the rotor, they are not limited to an ordinary squirrel-cage type which is used for explanation in this specification since other types, such a double squirrel-cage type, deep-slot squirrel-cage type or a special squirrel-cage type, can be adopted for the motor of the present invention. When referred to as "conductive members" in this specification, it is meant for squirrel-cage type conductive members disposed in respective slots of a squirrel-cage type rotor.

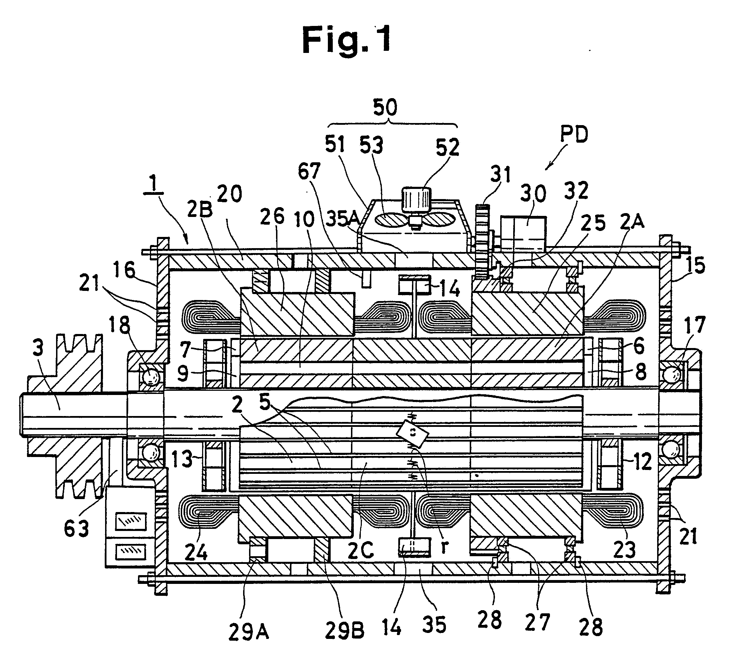

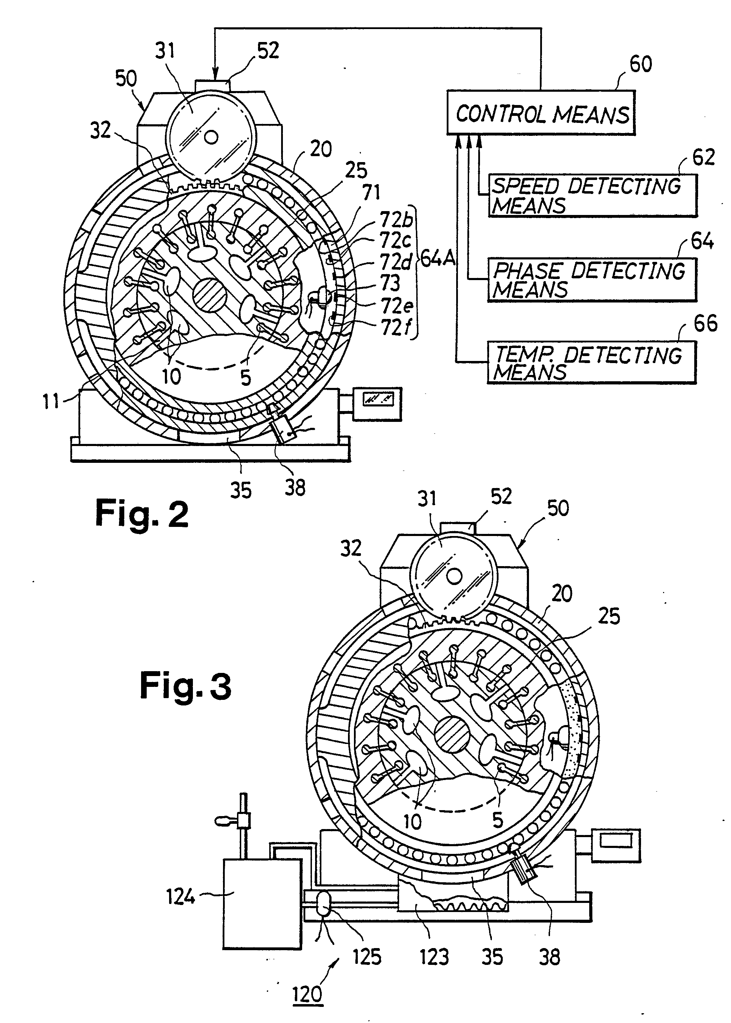

Detailed arrangements concerning one embodiment according to the present invention are explained hereinafter. Fig. 1 shows a cross-sectional view along the axis of the induction motor 1 according to the present invention and Fig. 2 shows a cross-sectional view in the transverse direction thereof. A rotor axle 3 of a rotor 2 carries thereon rotor cores 2A, 2B with a predetermined space therebetween. Between the rotor cores 2A and 2B, there is provided a non-magnetic core portion 2C but, instead of the non-magnetic core, there may be provided simply an air space in smaller type induction motors. In the arrangement illustrated in the drawings, there is provided a non-magnetic core 2C between the rotor cores 2A, 2B. The non-magnetic core 2C may be of heat resisting material, such as asbestos and ceramics (including earthenware, as bricks, and non-magnetic new ceramics). The rotor cores 2A, 2B carry a plurality of rotor conductive members 5... which extend through to both ends of the rotor cores 2A, 2B in a squirrel-cage form, and both ends of the rotor conductive members 5... are interconnected by short-circuit rings 6, 7. The rotor conductive members 5... are interconnected and short-circuited by resistive or connecting members r... at the position of the non-magnetic core 2C between the rotor cores 2A and 2B. The resistive members r may be of high resistivity material such as nichrome wire, steel with carbon content and conductive ceramics. It is not required that all of the rotor conductive members 5... be connected as they may partly, for example, every other of them, be connected. Insulation coating may optionally be applied to the resistive members r....

In the rotor cores 2A, 2B and the non-magnetic core 2C, there are provided a plurality of internal air passages 10 which extend to both ends of the rotor 2 and from which a plurality of radial air passages 11 extend outwardly towards the periphery of the rotor 2. The rotor 2 is provided, at its two ends, with fans 12, 13 which blow air into the internal air passages 10 as the rotor 2 rotates. On the periphery of the non-magnetic core 2C, there are provided a plurality of cooling stirrers 14 which are arranged in a blade wheel form and which are made of such non-magnetic material as aluminum, stainless steel, ceramics, resin, rubber and glass. Where the cooling stirrers 14 are made of conductive material, it is desirable that their surfaces be coated with insulating materials. As for the cooling stirrers 14, it is possible that the non-magnetic core 2C itself be formed into a blade wheel form, any number of such stirrers 14 formed in any appropriate form be mounted on either or both of the inner side of the rotor cores 2A, 2B and, where there is an air space between the rotor cores 2A, 2B, such stirrers 14 be mounted directly on the rotor axle 3. Also, the resistive members r... may be formed into the stirrers 14 by appropriately shaping and positioning them, for example, in zigzag lines.

The rotor 2 formed in one-piece and arranged as explained above is rotatably supported at their both ends by bearings 17, 18 which are carried by bearing bases 15, 16, thereby allowing the rotor 2 to rotate freely within the machine frame 20. The bearing bases 15, 16 are fastened to the machine frame 20 of a cylindrical con figuration by means of bolts and nuts. In the bearing bases 15, 16 there are provided a plurality of air passage holes 21.

A first stator 25 having stator windings 23 and a second stator 26 having stator windings 24 are surroundingly facing the rotor cores 2A, 2B respectively, and are disposed side by side on the inner wall of the machine frame 20. Between the machine frame 20 and the first stator 25, there are provided contact bearings 27, 27 whose movement to right and left is restricted by stop rings 28, 28 which are carried in the inner wall of the machine frame 20. On the other hand, the second stator 26 is unmovably fixed to the machine frame 20 by an air passable fixing ring 29A having an appropriate number of air passing windows and a fixing ring 29B. A pulse motor 30 is mounted on the upper outer periphery of the machine frame 20 and a driving gear 31 is fixedly mounted on the output shaft of the motor 30. The driving gear 31 extends into the machine frame 20 through an opening provided therein and engages with a gear 32 which is fixed on one outer side surface of the first stator 25. The first stator 25 rotates about the common axis of the rotor 2 in response to the operation of a rotating mechanism whose main component element is the pulse motor 30. Due to the relative rotational difference produced with respect to the second stator 26 by the rotation of the first stator 25, there is produced a phase difference between the rotating magnetic fields generated around the respective rotor cores 2A, 2B. That is, the rotating mechanism of the first stator 25 described above forms a phase shifting means PD which is mechanically structured. Control of the amount of rotation of the first stator 25, that is, control of a phase difference between the rotating magnetic fields, is performed by means of switching the pulse motor 30 in clock-wise or counter clock-wise rotations. The driving power source of the rotating mechanism is not limited to the pulse motor 30 as any other servo-mechanism such as pneumatic, hydraulic cylinder systems may well be utilized. A simple method by which the object may be achieved may include the manual operation by use of manual handles. The arrangement illustrated in the drawings is one in which one stator, that is, the first stator 25 is relatively rotated with respect to the second stator 26. However, it is possible to so arrange that both the first stator 25 and the second stator 26 rotate in the same direction but with a different rotational speed or that both the stators rotate respectively in the direction opposite from each other. In the illustrated embodiment, the phase shifting means PD is a mechanical arrangement as explained above but, of course, the same may be arranged to be purely electrical by, for example, using a system of switching the connections of the stator windings, using additionally a phase shifter of induction type, or using a combination of a mechanical arrangement and an electrical arrangement of some sort. For connecting stator winding 23, 24 wound respectively on the first and second stators 25, 26 to the three-phase power source lines, there are two methods one of which is to connect the windings of the stators respectively in series and the other is to connect them simply in parallel. The former method is superior in many characteristic respects but the latter may be used in some limited areas of use.

Now, an explanation will be made on an air moving means 50 whose operation is controlled based on signals sent from a controlling means 60 which will be explained later. In the illustrated embodiment, the air moving means 50 is disposed on the top middle portion of the machine frame 20. The air moving means 50 comprises an air moving chamber 51 the top of which is opened and which is mounted on the machine frame 20 in such a way that the chamber 51 embraces one (35A) of the openings 35 provided in the machine frame 20, a fan motor 52 which is supported within the air moving chamber 51 and a fan 53 which is carried on the axle of the fan motor 52. The air moving means 50 may either be in the form in which the ambient air is forced in for cooling the internal component elements (especially, the resistive members r...) and the warmed air is forced out through the openings 35 other than the one (35A) embraced by the air moving chamber 51, or in the form in which the air is forced in through the openings 35 other than the one embraced and the warmed air is forced out through the opening (35A) embraced by the air moving chamber 51. In an arrangement where the air moving chamber 51 is disposed on a top middle portion of the machine frame 20 as in the illustrated example, the better cooling effect may be achieved in the latter form. For effecting the cooling operation more effectively and more positively, an air cooling system 120, for cooling the air itself introduced within the machine frame 20 of the motor, may be arranged in association with the openings 35 as shown in Fig. 3. The air cooling system 120 mainly consists of a radiator 123 which embraces the opening 35 disposed at a bottom portion of the machine frame 20, a water container 124, and a pump 125 connecting the radiator 123 and the water container 124. Furthermore, though an illustration is omitted, the air cooling system 120 can be in the form of a cooling means employing a compressor and cooling gas.

The control of the above-explained air moving means 50, that is, starting, stopping or speed controlling of the fan motor 52, is effected by the control means 60 based on a variety of information. Connected to the input side of the control means 60 as source of control information are a speed detecting means 62 which detects actual rotation speeds of the rotor 2, a phase detecting means 64 which detects the phase differences controlled and set by the phase shifting means PD and a temperature detecting means which are provided directly to or close to such component elements as are apt to be heated or to accumulate heat within the machine frame 20 so that temperatures of those elements or of the air in the spaces involved may be detected. As for the speed detecting means 62, it is not limited to the tachometer 63 as shown in Fig. 1 as other non-contact type detecting devices such as a strobo-type rotation detecting device and a photo-electric type rotation detecting device may well be used by having them associated to the rotor cores 2A, 2B, the non-magnetic core 2C, the rotor conductive members 5..., etc. The temperature detecting means 66 may typically be a thermistor 67 and is provided between the rotor core 2A, 2B on the inner wall of the machine frame 20. Where the phase shifting means PD is arranged electrically, it is possible to input the resulting phase difference as signals directly into the control means 60 so that means such as the phase detecting means 64 is not necessary.

Now, how the air moving means 50 is controlled by the control means 60 is hereinafter explained. While the motor is operating at a high-speed region at which the detected signal from the speed detecting means 62 is above the certain predetermined level, the control means 60 causes the air moving means 50 to stop its operation or to decrease the rotation speed of the fan motor 52 of the air moving means 50 in inverse proportion to the level of the detection signals. When the motor is operating at a high-speed region, the current which flows in the resistive members r... is small so that the extent of heating and accumulation of heat is low and, thus, the forced cooling or heat radiation by means of the air moving means 50 is not necessary. On the contrary, when the motor is operating at a low speed region at which the detected signal from the speed detecting means 62 is below the predetermined level, the control means 60 causes the air moving means 50 to start its operation or to accelerate the rotation speed of the fan motor 52 in inverse proportion to the level of the detected signals. When the motor is operating at a high-speed region at which the detected signal from the phase shifting means 64 is below the rated level, the control means 60 causes the air moving means 50 to stop its operation or to decelerate the rotation speed of the fan motor 52 of the air moving means 50 in directly proportional to the level of the detection signals. Conversely, when the motor is operating at a low-speed region at which the detected signal from the phase shifting means 64 is above the predetermined level, the control means 60 causes the air moving means 50 to stop its operation or to accelerate the rotation speed of the fan motor 52 in proportion to the level of the detected signals. When the detected temperature from the temperature detecting means 66 is below the predetermined level, the control means 60 causes the air moving means 50 to stop its operation or to decelerate the rotation speed of the fan motor 52 within the air moving means 50 in direct proportion to the level of the detected temperature. On the contrary, when the detected temperature from the temperature detecting means 66 is above the predetermined level, the control means 60 causes the air moving means 50 to stop its operation or to accelerate the rotation speed of the fan motor 52 in proportional to the level of the detected temperature.

A few examples of the phase detecting means 64, where the phase shifting means PD is arranged mechanically as in the embodiment shown in the drawings, are now explained.

Fig. 2 shows a first example by a phase detecting means 64A. The inner wall of the machine frame 20 carries a non-magnetic plate 71. This non-magnetic plate 71 carries thereon or carries buried therein a plurality of magnetic pieces 72(a-f) the diameters of which are different from one another and which are disposed in order of their diameters. A magnetic sensor 73 for detecting magnetic power is disposed on the outer periphery of the rotatable stator, that is, the first stator 25, so as to be associated with the magnetic pieces 72. The magnetic sensor 73 sends to the control means 60 signals which are of information on differences in the detected amount responsive to the differences in the diameters of the magnetic pieces 72a-72f and which correspond to the relative rotational differences of the first stator 25 with respect to the second stator 26, that is, the phase differences between the respective rotating magnetic fields produced by the first and the second stators 25, 26 around the rotor 2. Thus, the magnetic sensor 73 together with the magnetic pieces 72a-72f forms the phase detecting means 64. On the contrary, this may be arranged such that the magnetic sensor 73 be provided on the machine frame 20 and the magnetic pieces 72a-72f be provided on the first stator 25.

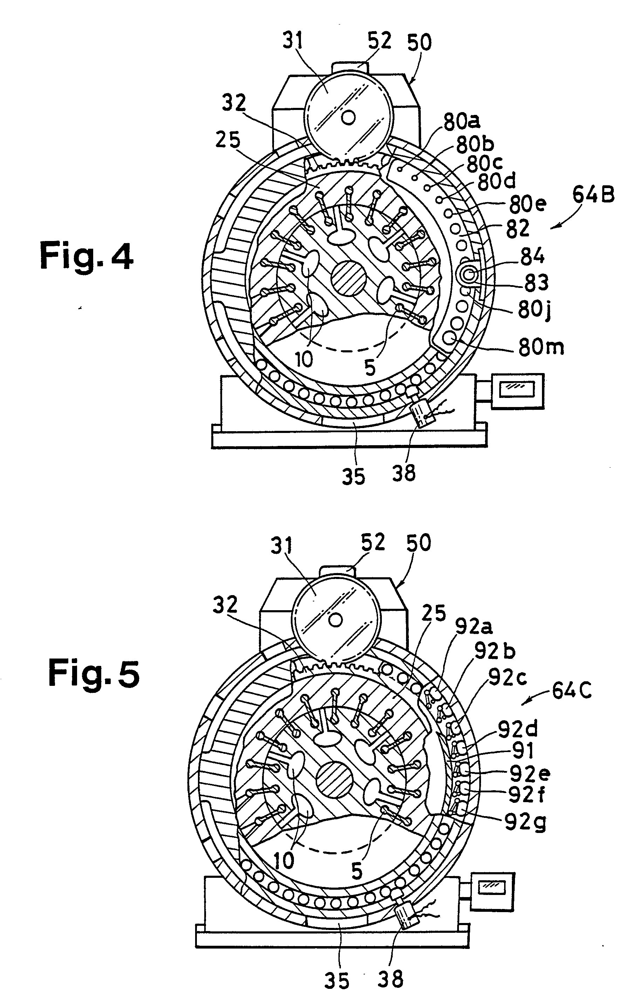

Fig. 4 shows a second example by a phase detecting means 64B. In this example, the first stator 25 carries on its end wall an arcuate plate 82 which has a plurality of detection holes 80(a-m) whose diameters are different from one another and the machine frame 20 carries on its inner wall a photo-sensor 84 fixed by a bracket 83 at a position facing the detection holes 80. A light emitting element (not shown in the drawings) is located at a position opposite from the photo-sensor 84 and behind the arcuate plate 82. The photo-sensor 84 sends to the control means 60 signals which are of information on differences in the diameters of the detection holes 80 and which correspond to the relative rotational differences of the first stator 25 with respect to the second stator 26, that is, the phase differences between the respective magnetic fields produced around the rotor 2 by the first stator 25 and the second stator 26.

Fig. 5 shows a third example by a phase detecting means 64C. In this example, the first stator 25 carries on its peripheral wall a detecting plate 91 of an oblong shape and the machine frame 20 carries on its inner wall a plurality of limiting switches 92(a-g). As the first stator 25 rotates, the movable portions of the limiting switches contact the detecting plate 91 so that the relevant phase differences are detected.

In Figs. 2 - 5, the numeral 38 represents a solenoid which is arranged in the machine frame 20. When the solenoid 38 is energized, the engagement of a projecting member of the solenoid 38 with the gear 32 which is mounted on the first stator 25 is released thereby rendering the first stator 25 to be in a rotatable state. However, under a normal state when the solenoid 38 is not energized, the projecting member of the solenoid 38 is in engagement with the gear 32 thereby maintaining the first stator 25 unrotatable.

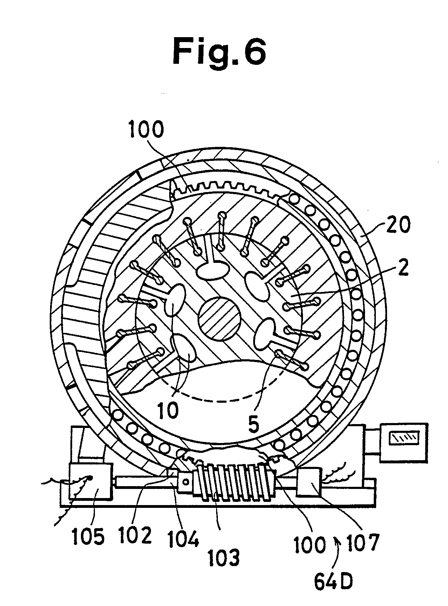

Fig. 6 shows a fourth example by a phase detecting means 64D. The first stator 25 carries at its side portion a worm wheel gear 100 which engages a worm gear 103 at and through an opening 102 provided at the bottom portion of the machine frame 20. One end of the axle of the worm gear 103 is connected to the axle of the pulse motor 105 mounted on the outer wall of the machine frame 20 and the other end thereof is connected to a rotary encoder (potentiometer) 107. The rotary encoder 107 outputs signals corresponding to the rotational difference of the first stator 25 with respect to the second stator 26, which is the phase difference between the respective rotating magnetic fields generated around rotor 2 by the first and the second stators 25, 26. The arrangement as in this example is superior to the above-explained examples I - 3 in that, since the first stator 25 and the pulse motor 105 are connected through the worm wheel gear 100 and the worm gear 103, it does not require any additional or separate means (as the solenoid 38 in the examples 1 - 3) to bring the first stator 25 to the fixed position when the first stator 25 is stopped and that, since the rotary encoder (potentiometer) 107 is employed, the phase differences can be detected steplessly.

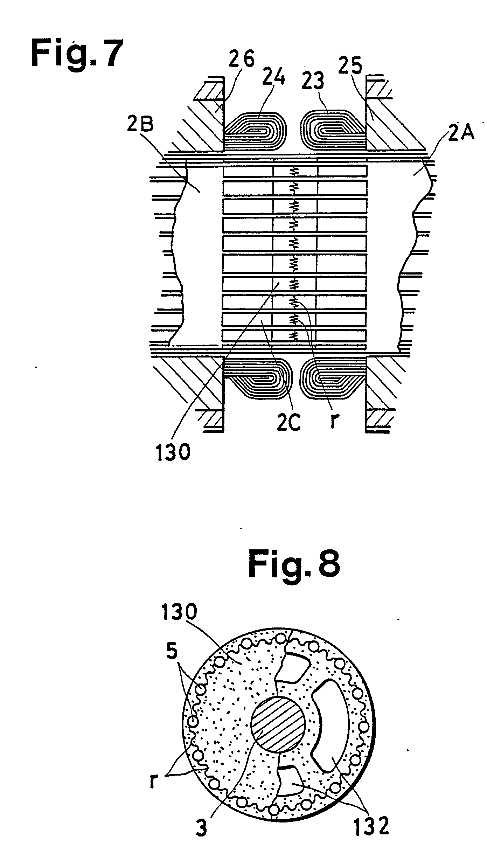

Next, some preferred examples of the non-magnetic core 2C which is disposed between the rotor cores 2A, 2B are explained by making reference to Figs. 7 - 12 and by separating a resistive members' core from a conductive members' core.

Figs. 7 and 8 show side views and sectional views of the main portions of the resistive members' core 130. The resistive members r... which short-circuit the conductive members 5... extending through between the rotor cores 2A, 2B are formed into the resistive members' cores 130 by having them covered by non-magnetic material which has high heat resistivity and insulating effects, for example, ceramics (including earthenware, new ceramics, etc.), resin, rubber, glass, asbestos, insulation coating applied aluminum and stainless steel, etc. The resistive members' core 130 is carried on a rotor axle 3 and may be provided with a plurality of windows 132 inside thereof as shown in Fig. 8 in which the right hand half thereof is seen. In view of the above arrangements, even when the conductive members 5... or the .resistive members r... are heated, not only is it possible to prevent any deformation of the resistive members r... but also to prevent the occurrence of oxidation of the resistive members r..., which results from the heating of the resistive members r....

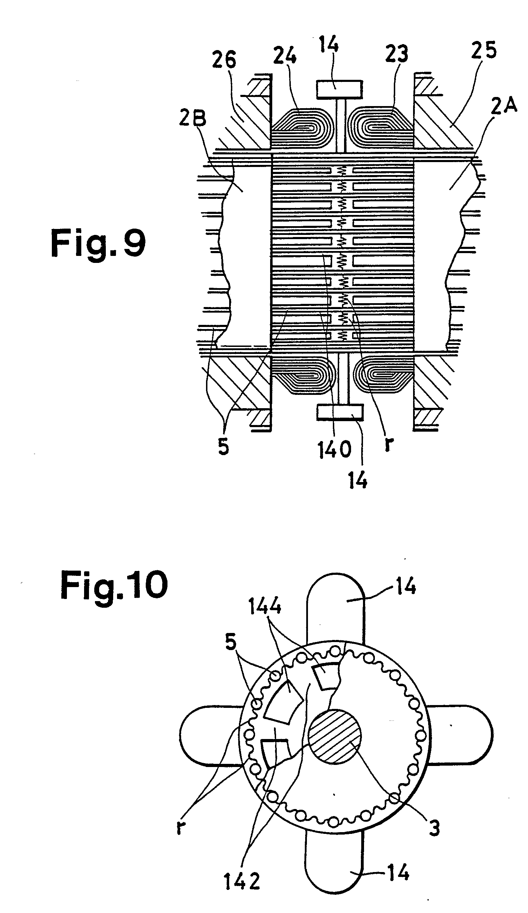

Figs. 9 and 10 show side views and sectional views of the main portions of the conductive members' core 140. The resistive members r... which short-circuit the con ductive members 5...extending through between the rotor cores 2A, 2B are formed into the conductive members' core 140 by having them covered respectively by any of the non-magnetic material as mentioned above which has high heat resistivity and insulating effects. The conductive members' core 140 is carried on a rotor axle 3 by a plurality of arm members 142 and windows 144 are provided between the arm members 142. This arrangement enables to prevent any deformation of the conductive members 5... during the operation of the motor.

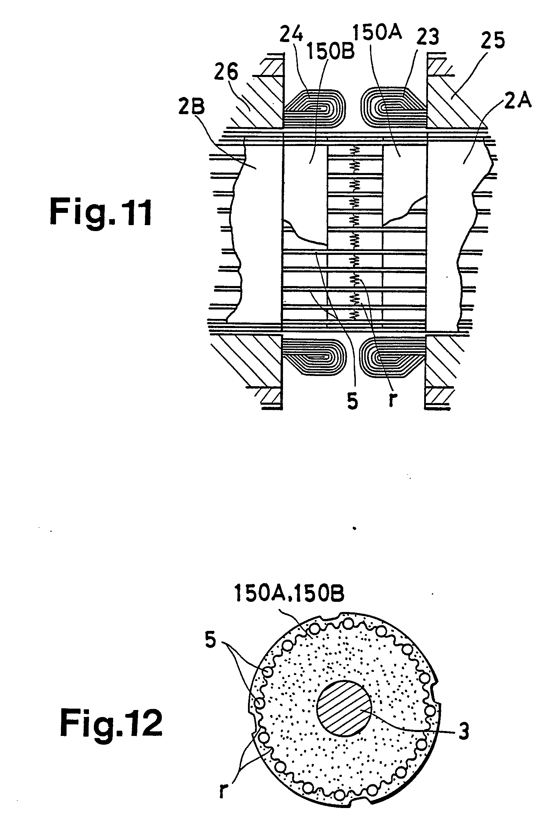

Figs. 11 and 12 show another example of the conductive members' core 150 in a side view and a sectional view of the main portions thereof. The conductive members' cores 150A, 150B which are of any of the non-magnetic material having high heat resistivity and insulating effects as mentioned above and in which the conductive members 5... are covered by any such material are mounted on the two ends of the rotor cores 2A, 2B which ends face each other.

## Claims

1. A variable speed controllable induction motor having:
a unitary rotor (2) having a plurality of rotor cores (2A,2B) mounted, with a predetermined space being provided therebetween, on a common axis and having a plurality of rotor conductive members (5) interconnected and respectively mounted on the rotor cores (2A,2B), the rotor conductive members (5) being short-circuited by resistive members (r) at an intermediate position between the rotor cores (2A,2B);
a plurality of stators (25,26) disposed side by side and surroundingly facing said respective rotor cores (2A,2B) of the rotor (2) and having stator windings (23,24) wound respectively on said stators (25,26); and
a phase shifting means (PD) for producing phase differences between the voltages induced on the portions of said conductive members (5) which face one of said plurality of stators (25,26) and the voltages induced on the corresponding portions of said conductive members (5) which face another one of said stators (25,26), characterized in that said motor further comprising:-
an air moving means (50) disposed at one of a plurality of openings (35A) provided in the machine frame (20) for forcing in the ambient air through the openings (35) other than said one opening (35A) into internal air passages formed between the rotor cores (2A,2B) and between the stators (25,26) and the machine frame (20) thereby to radiate heat from and cool said resistive members (r) and for forcing the warmed air outside the machine frame (20); and
a control means (60) for controlling the operation of said air moving means (50) based on at least one kind of information out of various information relating to rotation speeds of said rotor (2), phase differences produced from said phase shifting means (PD) and tempera tures taken at an appropriate point within the machine frame (20).

2. A variable speed controllable induction motor according to Claim 1 characterized in that a plurality of air stirrers (14) are provided between said rotor cores (2A,2B).

3. A variable speed controllable induction motor according to Claim 1 characterized in that to the input side of said control means (60) is connected a speed detecting means (62) for detecting rotation speeds of said rotor (2).

4. A variable speed controllable induction motor according to Claim 1 characterized in that to the input side of said control means (60) is connected a phase detecting means (64) to detect a phase difference produced in response to the operation of said phase shifting means (PD) whereby said air moving means (50) is controlled based on the detected signals from said phase detecting means (64).

5. A variable speed controllable induction motor according to Claim 1 characterized in that to the input side of said control means (60) is connected a temperature detecting means (66) disposed at an appropriate position within the machine frame (20) whereby said air moving means (50) is controlled based on the detected signals from said temperature detecting means (66).

6. A variable speed controllable induction motor according to Claim 1 characterized in that said rotor conductive members (5) disposed between said rotor cores (2A,2B) are covered by a conductive members' core (140; 150A,150B) formed wholly or partly with non-magnetic material of high heat resistivity.

7. A variable speed controllable induction motor according to Claim 1 characterized in that said resistive members (r) disposed between said rotor cores (2A,2B) are covered by a resistive members' core (130) formed wholly or partly with non-magnetic material of high heat resistivity.

8. A variable speed controllable induction motor according to Claim 6 or 7 characterized in that said non-magnetic material is of insulation material or is coated with insulation material.

# Fig.1

**Fig. 2**

CONTROL MEANS — 60

SPEED DETECTING MEANS — 62

PHASE DETECTING MEANS — 64

TEMP. DETECTING MEANS — 66

**Fig. 3**

Fig. 4

Fig. 5

# Fig.6

# Fig. 7

# Fig. 8

Fig.9

26    24    14    23    25
2B                          2A

5    140    r
14

Fig.10

144    14
5
r
142    3    14

**Fig.11**

24  150B  150A  23  25
26  2B  2A

5  r

**Fig.12**

150A,150B

5

3

r